# EUROPEAN PATENT APPLICATION

(11) **EP 1 947 789 A2**
(43) Date of publication of application: **23.07.2008**
(21) Application number: 07112064.6
(22) Date of filing: 09.07.2007
(51) Int. Cl.: H04H 1/00

(54) **Digital broadcasting receiver and channel tuning method thereof**

(30) Priority: 22.01.2007 KR 20070006651
(71) Applicant: Samsung Electronics Co., Ltd., Suwon-si, Gyeonggi-do 442-742 (KR)
(72) Inventor: Lee, Young-jin, Dong-gu Incheon (KR)
(74) Representative: Waddington, Richard

(57) **Abstract**

A digital broadcasting receiver is provided. The digital broadcasting receiver includes a storage unit (130) in which modulation type parameters for channels are stored; a signal receiver (110) which tunes a channel and receives a broadcasting signal; and a signal processor (120) which demodulates the received broadcasting signal using a modulation type parameter corresponding to the tuned channel. Accordingly, the time for channel conversion can be shortened by shortening the channel turning time.

## Description

The present invention relates to a digital broadcasting receiver and a channel tuning method thereof, and more particularly to a digital broadcasting receiver demodulating a received broadcasting signal using modulation type parameters for channels and a channel tuning method thereof.

A digital broadcasting has an advantage in that system integration and mutual management are allowed through a digital code system, differently from an analog broadcasting. Accordingly, the digital broadcasting includes a condition for a core of media convergence using computers and networks and becomes an opportunity for newly changing a unilateral and downward analog broadcasting region by adding a conversation function.

In order to secure the convergence and the mutual management of the digital broadcasting, standardization is necessary. A digital terrestrial DTV broadcasting method has standards such as ATSC of U.S.A and digital video broadcasting-terrestrial (DVB-T) of Europe.

Here, the DVB-T uses a coded orthogonal frequency division multiplexing (COFDM) modulation type.

A broadcasting receiver receiving a broadcasting signal according to the DVB-T modulation type stores various TPS information specs according to the prestored EISI EN 300 744. If a broadcasting receiver receives a broadcasting signal of a predetermined channel, it determines a lock state of a broadcast signal. Then, if the broadcasting signal is locked, it is output on a screen through a signal processing processes such as a decoding, a scaling, and an enhancement.

Here, the lock state of the broadcasting signal is determined in the demodulation process of the broadcasting signal.

On the other hand, since in the demodulation process of a conventional digital broadcasting receiver, the modulation type parameter of a received channel cannot be recognized, it is necessary to confirm whether there is locked TPS information by applying the TPS information for signal processing modules of the demodulation section one by one.

Here, in the case in which the TPS information according to the EISI EN 300 744 standard is applied one by one, the number of cases is 120 or more. Accordingly, the reception of the broadcasting signal of the tuned channel is delayed by determining the lock state whenever the channel is tuned.

The present invention provides a digital broadcasting receiver capable of shortening a channel conversion time by providing modulation type parameters for channels in advance and demodulating a received broadcasting signal, and a channel tuning method thereof.

According to the present invention there is provided an apparatus and method as set forth in the appended claims. Preferred features of the invention will be apparent from the dependent claims, and the description which follows.

According to an aspect of the present invention there is provided a digital broadcasting receiver comprising: a storage unit operable to store modulation type parameters for channels; a signal receiver which is operable to tune a channel and to receive a broadcasting signal; and a signal processor which is operable to demodulate the received broadcasting signal using a modulation type parameter corresponding to the tuned channel.

The digital broadcasting receiver may further comprise: a channel search unit which is operable to perform a channel search; a controller which is operable to combine parameters classified according to a plurality of references and to control the signal processor to demodulate the broadcasting signal of the broadcasting channel searched for by the channel search unit by applying the combined parameters to the broadcasting signals; and a determiner which is operable to determine a lock state of the broadcasting channel according to a signal processing state to which the combined parameters are applied, and the controller may be operable to store the combination of the parameters applied to the broadcast channel determined to be in a lock state as the modulation type parameter corresponding to the broadcasting channel in a lock state.

The digital broadcasting receiver may further comprise: an OTA storage unit which is operable to store OTA information on a signal changing situation if the OTA information is received through the signal receiver, and the controller may be operable to control the channel search unit to perform the channel search to update the modulation type parameter stored in the storage unit, if the OTA information is newly received.

The digital broadcasting receiver may further comprise: an OTA storage unit which is operable to store OTA information on a signal changing situation if the OTA information is received through the signal receiver; and a user interface unit which is operable to provide a user interface inquiring about a channel search, if the OTA information is received, and the controller may be operable to control the channel search unit to perform the channel search to update the modulation type parameter stored in the storage unit if a channel search instruction is input in the state in which the OTA information is received and the user interface is provided.

The digital broadcasting receiver may further comprise: an OTA storage unit which is operable to store OTA information on a signal changing situation if the OTA information is received through the signal receiver, and the controller may be operable to control the channel search unit to perform the channel search to update the modulation type parameter stored in the storage unit if a power source of the digital broadcasting receiver is turned on, in the case in which new OTA information is stored in the OTA storage unit and the power source of the digital broadcasting receiver is turned off.

The channel search unit may be operable to perform an automatic channel search by controlling the signal receiver to sequentially tune a plurality of broadcasting channels.

The modulation type parameter may include at least one of transmission mode information, guard interval information, constellation pattern information, hierarchy information, and code rate information.

According to another aspect of the present invention, there is provided a channel tuning method of a digital broadcasting receiver, comprising: tuning a channel and receiving a broadcasting signal; detecting one of stored modulation type parameters for channels, which corresponds to the tuned channel; and demodulating the received broadcasting signal using the detected modulation type parameter.

The channel tuning method may further comprise: (a1) performing a channel search; (a2) combining parameters classified according to a plurality of references; (a3) determining a lock state of a broadcasting channel by applying the combined parameters to a broadcasting signal of a searched broadcasting channel; and (a4) storing the combination of the parameters applied to the broadcasting channel determined to be in a lock state as the modulation type parameter corresponding to the broadcasting channel in the lock state.

The channel tuning method may further comprise: updating the modulation type parameters for channels by performing (a1) to (a4), if OTA information on a channel changing situation is received.

The channel tuning method may further comprise: providing a user interface inquiring about a channel search if the OTA information about the channel changing situation is received; and updating the modulation type parameters for channels by performing (a1) to (a4), if a channel search instruction is input through the user interface.

The channel tuning method may further comprise: storing OTA information on a channel changing situation if the OTA information is received; and updating the modulation type parameters for channels by performing (a1) to (a4), if the digital broadcasting receiver is turned on and then is turned off in the state in which the OTA information is newly stored.

In the channel search, an automatic channel search may be performed by controlling the signal processor to sequentially tune a plurality of broadcasting channels.

The modulation type parameter may include at least one of transmission mode information, guard interval information, constellation pattern information, hierarchy information, and code rate information.

For a better understanding of the invention, and to show how embodiments of the same may be carried into effect, reference will now be made, by way of example, to the accompanying diagrammatic drawings in which:
FIG. 1 is a block diagram showing a digital broadcasting receiver according to an exemplary embodiment of the present invention;
FIGS. 2 and 3 are block diagrams showing the digital broadcasting receiver of FIG. 1 in detail;
FIG. 4 is a flow chart for explaining a channel tuning method of a digital broadcasting receiver according to an exemplary embodiment of the present invention; and
FIG. 5 is a flow chart for explaining a channel tuning method of a digital broadcasting receiver according to another exemplary embodiment of the present invention.

Hereinafter, preferred embodiments of the present invention will be described in detail with reference to the accompanying drawings.

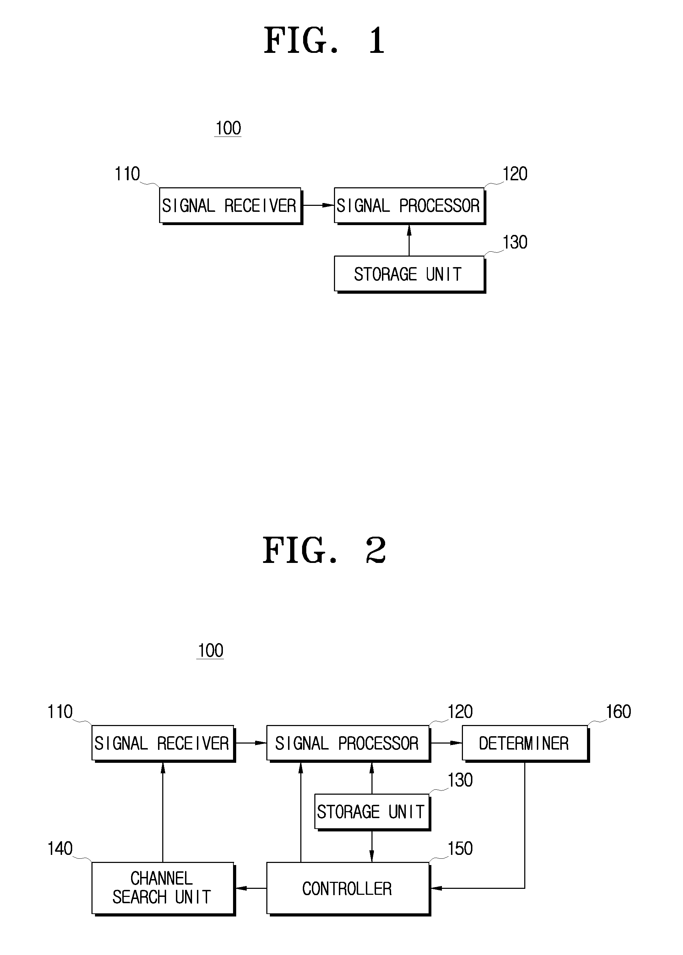

FIG. 1 is a block diagram showing a digital broadcasting receiver according to an exemplary embodiment of the present invention. Referring to FIG. 1, the digital broadcasting receiver 100 includes a signal receiver 110, a signal processor 120, and a storage unit 130.

The signal receiver 110 tunes a channel and receives a broadcasting signal. Then, the signal receiver 110 can be realized by a tuner, and the broadcasting signal received through the signal receiver 110 may be a signal modulated according to a COFDM modulation method.

The storage unit 130 stores modulation type parameters for channels. Here, the stored modulation type parameters may be TPS information of the COFDM modulation method. More particularly, the modulation type parameters may include transmission mode information, guard interval information, constellation pattern information, hierarchy information, and code rate information. Here, the spec on the TPS information is defined in ETSI EN 300 744 in detail. That is, the storage unit 130 classifies the TPS information on the basis of the spec of ETSI EN 300 744 according to the modulation methods for the channels and stores the classified TPS information.

The signal processor 120 demodulates the broadcasting signal received through the signal receiver 110 using the modulation type parameter corresponding to a tuned channel. Here, the demodulated broadcasting signal is output in the form of a transmission stream and is output on a screen through signal processing processes such as a decoding and a scaling.

FIG. 2 is a block diagram showing the digital broadcasting receiver of FIG. 1 in detail. Referring to FIG. 2, the digital broadcasting receiver 100 includes a channel search unit 140, a controller 150, and a determiner 160 in addition to the constitution of FIG. 1.

The channel search unit 140 performs an automatic channel search by controlling the signal receiver 110 to sequentially tune a plurality of broadcasting channels. Here, the channel search may be manually performed.

If the broadcasting frequency is set to the UHF band of 470 to 862 MHz and the channel bandwidth is set to 8 MHz, the channel search unit 140 searches for an available channel by moving the frequency from the start frequency of 470 MHz by a scan step of 166 KHz.

The controller 150 combines parameters classified according to a plurality of references and controls the signal processor 120 to demodulate the broadcasting signals for the broadcasting channels searched for by the channel search unit 140 by applying the combined parameters. Here, the references may include a transmission mode, a guard interval, a constellation pattern, and a code rate.

The determiner 150 determines the lock state of the broadcasting channels according to the signal processing state to which the combined parameters are applied. More specifically, if the channel search unit 140 tunes a first channel and receives a broadcasting signal, the controller 150 controls the signal processor 120 to perform a demodulation.

Then, the signal processor 120 performs signal processing processes such as a conversion of the bandwidth of the center frequency of the received broadcasting signal, an ADC transformation, an automatic gain control, a signal interpolation, a fast Fourier transformation, a symbol/bit deinterleaving, and a forward error correction (FFC). On the other hand, the determiner150 determines the automatic gain control lock state in the signal processing processes and performs the following signal processing process in the case of a locked state. The signal processing processes can be performed only in the case in which the previous step is in a locked state.

Here, the determination of a lock state is performed on the basis of the combination of the TPS information according to the ETSI EN 300 744 spec prestored in the storage unit 130.

The controller 150 stores the combination of the parameters, in which the demodulation of the signal processor 120 is applied to the broadcasting channel determined to be in a lock state, as the modulation type parameters corresponding to the broadcasting channel in a lock state.

For example, if the combination of the TPS information applied to the broadcasting signal received in Channel 5 is the transmission mode of 2 K, the guard interval of 1/32, the constellation pattern of 64 QAM, a non-hierarchy, and the code rate of 2/3 in a lock state, the controller 150 stores the combination of the applied TPS information in the storage unit 130 as the modulation type parameter of Channel 5. Accordingly, then, if a channel tuning instruction is input, the modulation type parameter corresponding to the tuned channel is detected to perform a demodulation. Therefore, the determination of a lock state can be omitted, thereby shortening the channel conversion time by 200 to 250 ms.

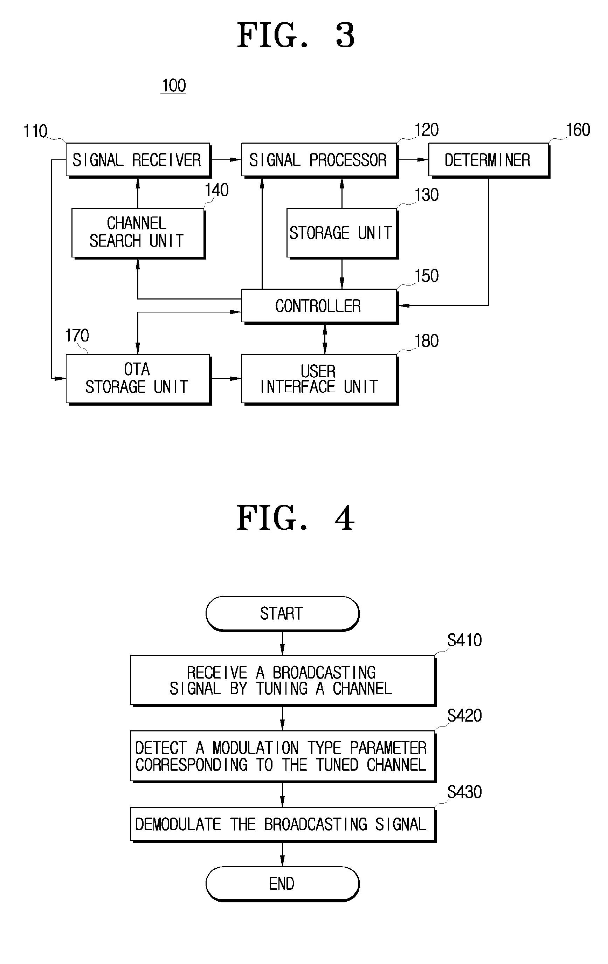

FIG. 3 is a block diagram showing the digital broadcasting receiver of FIG. 1 in detail. Referring to FIG. 3, the digital broadcasting receiver 100 includes an over the air (OTA) storage unit 170 and a user interface unit 180, in addition to the constitution of FIG. 2.

If the OTA information on the channel changing situation is received through the signal receiver 110, the OTA storage unit 170 stores the received OTA information.

Here, the OTA information may be information on a new channel and a change of a demodulation parameter of an existing broadcasting station.

If the OTA information is newly received, the controller 150 can update the modulation type parameter stored in the storage unit 130 by controlling the channel search unit 140 to perform a channel search.

Further, if the OTA information is received, the controller 150 provides a user interface inquiring about the channel search by controlling the user interface 180.

If a channel search instruction is input through a user interface in the state in which the OTA information is received and the user interface is provided, the controller 150 updates the modulation type parameter stored in the storage unit 130 by controlling the channel search unit to perform a channel search.

If a channel search reserving instruction is input through a user interface, the controller 150 updates the modulation type parameter stored in the storage unit 130 by performing an automatic channel search when the power source of the digital broadcasting receiver 100 is turned on or off.

That is, if the power source of the digital broadcasting receiver 100 is turned off in the state in which new OTA information is stored in the OTA storage unit 170, the controller 150 updates the modulation type parameter stored in the storage unit by controlling the channel search unit 140 to perform a channel search when the power source of the digital broadcasting receiver 100 is turned on.

FIG. 4 is a flow chart for explaining a channel tuning method of a digital broadcasting receiver according to an exemplary embodiment of the present invention. Referring to FIG. 4, a broadcasting signal is received by tuning a channel (S410). Then, the received broadcasting signal may be a signal demodulated according to the COFDM modulation method.

A modulation type parameter corresponding to the tuned channel is detected from the prestored modulation type parameters for channels (S420), and the received broadcasting signal is demodulated using the detected modulation type parameter (S430). Here, the demodulated broadcasting signal is output in the form of a transmission stream and is output on a screen through signal processing processes of a decoding and a scaling.

The prestored modulation type parameters for channels are the TPS information according to the ETSI EN 300 744 spec. Here, the TPS information may include transmission mode information, guard interval information, constellation pattern information, hierarchy information, and code rate information.

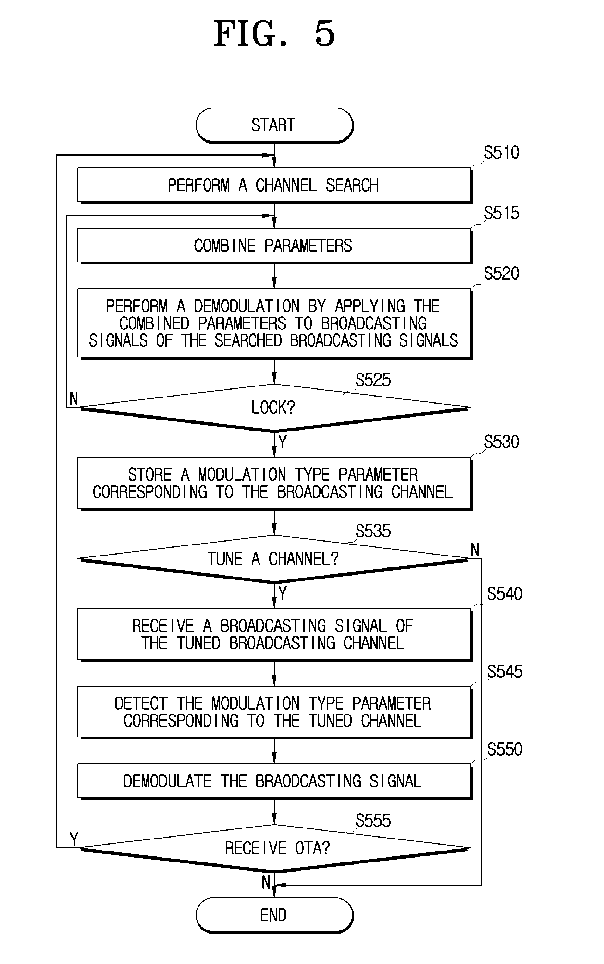

FIG. 5 is a flow chart for explaining a channel tuning method of a digital broadcasting receiver according to another exemplary embodiment of the present invention. Referring to FIG. 5, a channel search is performed (5510). That is, a plurality of broadcasting channels are sequentially tuned and the parameters classified according to a plurality of references, which are to be applied to the tuned channel, are combined (S515).

According to the channel search, demodulation is performed by applying the combined parameters to the broadcasting signals of the broadcasting channels (S520).

Next, the lock states of the broadcasting channels are determined according to the signal processing state to which the combined parameters are applied (S525).

Here, the lock state is determined whenever the signal processing processes are performed by combining the TPS information based on the prestored ETSI EN 300 744 spec according to the number of cases. That is, the lock state is determined if a pilot signal of the broadcasting signal is located at the position of the corresponding frame, by applying the combined TPS information in the signal processing processes.

More particularly, a demodulation is performed, such as a conversion of the bandwidth of the center frequency of the received broadcasting signal, an ADC transformation, an automatic gain control, a signal interpolation, a fast Fourier transformation, a symbol/bit deinterleaving, and a forward error correction (FFC).

Here, if the lock states are determined in the signal processing processes, a signal processing process of the following step is performed. The signal processing processes can be performed only in the case in which the previous step is in a locked state. That is, the lock of the broadcasting signal is the case of a forward error correction.

If the broadcasting signal is determined to be locked (S525), the combination of the applied parameters is stored as the modulation type parameter corresponding to the locked broadcasting channel (S530).

Next, if a channel tuning instruction is input (S535), the broadcasting signal of the tuned broadcasting channel is received (S540) and one of the stored modulation type parameters for the channels, which corresponds to the tuned channel, is detected (S545). Next, the broadcasting signal is demodulated using the detected modulation type parameter (S550).

On the other hand, if OTA information on a channel changing situation is received (S555), the modulation type parameter is updated by performing S510 to S530.

Here, the OTA information is received (S555), the modulation type parameter can be updated by performing an automatic channel search and an automatic channel search instruction may be set by a user to update the modulation type parameter. On the other hand, in the case in which the power source of the digital broadcasting receiver is turned off without performing the update, the automatic channel search may be performed when the power source is turned on to perform the update.

As mentioned above, a broadcasting signal received when a channel is tuned can be demodulated using a modulation type parameter for a channel stored through a channel search. Accordingly, the lock determining time of the broadcasting signal can be shortened when the channel is tuned.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A digital broadcasting receiver comprising:
a storage unit (130) operable to store modulation type parameters for channels;
a signal receiver (110) which is operable to tune a channel and to receive a broadcasting signal; and
a signal processor (120) which is operable to demodulate the received broadcasting signal using a modulation type parameter corresponding to the tuned channel.

2. The digital broadcasting receiver as claimed in claim 1, further comprising:
a channel search unit (140) which is operable to perform a channel search;
a controller (150) which is operable to combine parameters classified according to a plurality of references and to control the signal processor (120) to demodulate the broadcasting signal of the broadcasting channel searched for by the channel search unit (140) by applying the combined parameters to the broadcasting signals; and
a determiner (160) which is operable to determine a lock state of the broadcasting channel according to a signal processing state to which the combined parameters are applied,
wherein the controller (150) is operable to store the combination of the parameters applied to the broadcast channel determined to be in a lock state as the modulation type parameter corresponding to the broadcasting channel in a lock state.

3. The digital broadcasting receiver as claimed in claim 2, further comprising:
an OTA storage unit (170) which is operable to store OTA information on a signal changing situation if the OTA information is received through the signal receiver (110),
wherein the controller (150) is operable to control the channel search unit (140) to perform the channel search to update the modulation type parameter stored in the storage unit (130), if the OTA information is newly received.

4. The digital broadcasting receiver as claimed in claim 2, further comprising:
an OTA storage unit (170) which is operable to store OTA information on a signal changing situation if the OTA information is received through the signal receiver (110); and
a user interface unit (180) which is operable to provide a user interface inquiring about a channel search, if the OTA information is received,
wherein the controller (150) is operable to control the channel search unit (140) to perform the channel search to update the modulation type parameter stored in the storage unit (130) if a channel search instruction is input in the state in which the OTA information is received and the user interface is provided.

5. The digital broadcasting receiver as claimed in claim 2, further comprising:
an OTA storage unit (170) which is operable to store OTA information on a signal changing situation if the OTA information is received through the signal receiver (110),
wherein the controller (150) is operable to control the channel search unit (140) to perform the channel search to update the modulation type parameter stored in the storage unit (130) if a power source of the digital broadcasting receiver is turned on, in the case in which new OTA information is stored in the OTA storage unit (170) and the power source of the digital broadcasting receiver is turned off.

6. The digital broadcasting receiver as claimed in claim 2, wherein the channel search unit (140) is operable to perform an automatic channel search by controlling the signal receiver (110) to sequentially tune a plurality of broadcasting channels.

7. The digital broadcasting receiver as claimed in one of claims 1 to 6, wherein the modulation type parameter includes at least one of transmission mode information, guard interval information, constellation pattern information, hierarchy information, and code rate information.

8. A channel tuning method of a digital broadcasting receiver, comprising:
tuning a channel and receiving a broadcasting signal;
detecting one of stored modulation type parameters for channels, which corresponds to the tuned channel; and
demodulating the received broadcasting signal using the detected modulation type parameter.

9. The channel tuning method as claimed in claim 8, further comprising:
(a1) performing a channel search;
(a2) combining parameters classified according to a plurality of references;
(a3) determining a lock state of a broadcasting channel by applying the combined parameters to a broadcasting signal of a searched broadcasting channel; and
(a4) storing the combination of the parameters applied to the broadcasting channel determined to be in a lock state as the modulation type parameter corresponding to the broadcasting channel in the lock state.

10. The channel tuning method as claimed in claim 9, further comprising: updating the modulation type parameters for channels by performing (a1) to (a4), if OTA information on a channel changing situation is received.

11. The channel tuning method as claimed in claim 9, further comprising:
providing a user interface inquiring about a channel search if the OTA information about the channel changing situation is received; and
updating the modulation type parameters for channels by performing (a1) to (a4), if a channel search instruction is input through the user interface.

12. The channel tuning method as claimed in claim 9, further comprising:
storing OTA information on a channel changing situation if the OTA information is received; and
updating the modulation type parameters for channels by performing (a1) to (a4), if the digital broadcasting receiver is turned on and then is turned off in the state in which the OTA information is newly stored.

13. The channel tuning method as claimed in claim 9, wherein in the channel search, an automatic channel search is performed by controlling the signal processor (120) to sequentially tune a plurality of broadcasting channels.

14. The channel tuning method as claimed in one of claims 8 to 13, wherein the modulation type parameter includes at least one of transmission mode information, guard interval information, constellation pattern information, hierarchy information, and code rate information.
